# EUROPEAN PATENT APPLICATION

(11) **EP 4 811 505 A1**
(43) Date of publication of application: **23.09.2026**
(21) Application number: 26174895.8
(22) Date of filing: 11.12.2023
(51) Int. Cl.: H01M 50/107, H01M 50/147, H01M 50/152, H01M 50/169

(54) **BATTERY**

(62) Document number(s) of the earlier application(s) in accordance with Art. 76 EPC: 23215480.7 / 4 571 955
(71) Applicant: Renata AG, 4452 Itingen (CH)
(72) Inventor: PFROMMER, Stefan, 5074 Eiken (CH); GERBER, Marco, 4106 Therwil (CH); HARING, Pascal, 4147 Aesch (CH); EL BARADAI, Oussama, 4057 Basel (CH); WU, Han, Pembroke Pines, 33029 (US)
(74) Representative: ICB SA

(57) **Abstract**

In one aspect the present invention concerns a battery (30) comprising:
- a cup-shaped bottom container (1) to accommodate an electrode assembly (4), the bottom container (1) comprising a base (2) and an upstanding sidewall (3) along an outer circumference of the base (2),
- a lid (10) comprising:
∘ an inner electrically conductive portion (11),
∘ an intermediate insulating portion (13) surrounding the inner electrically conductive portion (11), and
∘ a peripheral adapter portion (12, 15) forming or constituting an outer peripheral edge portion (26) of the lid (10) and fixable to the sidewall (3) of the bottom container (1) via the outer peripheral edge portion (26), wherein the peripheral adapter portion (12, 15) is sized, shaped and/or configured to bridge a gap between an outer edge (28) of the intermediate portion (13) and an inside perimeter of the sidewall (3).

## Description

### Field of the invention

The present invention is related to batteries, e.g. button batteries, which are well-known as power sources for small electrically driven implements such as watches, thermometers or the like.

### Background

Batteries, e.g. button batteries, which are also known as button cells, are widely used and available in a plurality of types, distinguished by various dimensions and shapes and by the materials used for the electrodes and the electrolyte.

Most known types of button batteries include a metallic bottom cup having a flat base portion that serves as the positive contact, and an upstanding sidewall which extends upwards from the flat portion, and a metallic top lid cup. The flat base portion of the lid cup serves as the negative contact. The battery further includes an electrode assembly in the space between the top and bottom cup. In a rechargeable lithium-ion button battery for example, the electrode assembly may be a spiral-shaped assembly obtained by rolling up a stack of electrode layers separated by separator sheets impregnated with a liquid electrolyte. Other electrode assemblies are formed as horizontal stacks of alternately stacked electrode and separator layers oriented parallel to the top and bottom contacts. Button cells are often shaped as round discs but other shapes are possible as well.

The production process of the above-described battery type includes arranging the electrode assembly into the top lid cup and inserting the lid cup into the bottom cup with a gasket or glue-type electrically insulating sealing in between the two for sealing off the electrode assembly from the exterior of the battery. If a physical gasket is used, the open end of the wall of the lid cup is inserted into the gasket and the bottom cup is crimped over the gasket. If a glue-type insulating seal is used, the outside of the sidewall of the top lid cup is coated with the sealing material, after which the top lid cup is inserted into the bottom cup. The glue is allowed to dry or cure, thus sealing the battery.

These known ways of sealing the batteries present a number of drawbacks. One problem is for example the double-wall configuration needed to accommodate either the gasket or the glue : the sidewalls of the top lid cup and the bottom cup must overlap against each other. This results in wasted space that is occupied by the insulating seal, either as a physical gasket or as the sealing glue.

A solution to this problem was found in the form of an improved battery design without the double wall configuration. This battery type is the subject of European patent application EP22178203. The battery still comprises a bottom cup that contains the electrode assembly, and that still acts as the positive contact. The battery further comprises a lid formed of three portions: an electrically conductive central portion, an electrically conductive peripheral portion and an electrically insulating intermediate portion that separates and insulates the central portion from the peripheral portion. The central portion acts as the negative contact and the insulating portion realizes the electrical insulation. The lid is fixed to the open end of the cup, thereby sealing off the battery from the exterior. The fixed connection of the lid to the cup is electrically conductive so that the base of the cup forms the positive contact of the battery.

A problem occurring in the manufacturing process of this battery type is related to the process of fixing the lid to the cup, which may be done by aligning the lid to the rim of the cup's sidewall and by welding (e.g. laser welding) of the lid to said rim along their aligned perimeters. However, obtaining a perfectly sealing weld connection requires that the dimensions of the lid and the cup are matched with a high degree of accuracy. Also, because of the small dimensions of the batteries of this type, it is difficult to maintain the lid in the correct position during the welding process. These problems are likely to lead to an imperfect weld and to a risk of leakage of chemicals from the interior of the battery

### Summary of the invention

The above-mentioned object will be solved and suitably addressed by a battery, in particular by a button battery. The battery comprises a cup-shaped bottom container to accommodate an electrode assembly. The bottom container comprises a base and a sidewall along an outer circumference of the base. The sidewall may be implemented as an upstanding or protruding sidewall, e.g. extending parallel to a surface normal of the flat or even shaped base. The battery further comprises a lid to close and/or to cover the interior of the bottom container.

The lid comprises an inner electrically conductive portion, an intermediate insulating portion surrounding the inner electrically conductive portion and a peripheral adapter portion. The peripheral adapter portion forms or constitutes an outer peripheral edge portion of the lid. The lid and/or the peripheral adapter portion is fixable to the sidewall of the bottom container, e.g. at an end of the sidewall that is located opposite the base of the cup-shaped bottom container.

The peripheral adapter portion is fixable or is fixed to the bottom container and hence to the sidewall of the bottom container via the outer peripheral edge portion.

The peripheral adapter portion is sized, shaped and/or configured to bridge a gap between an outer edge of the intermediate portion of the lid and an inside perimeter of the sidewall.

Specifically, the peripheral adapter portion is sized and configured to provide a matching, e.g. a geometric matching or shape-matching between the intermediate insulating portion and the sidewall of the cup-shaped bottom container. The peripheral adapter portion is particularly suitable to individually adapt one and the same type or shape of an intermediate insulating portion to a variety of bottom containers, which may distinguish by their shape and/or size.

In some examples the peripheral adapter portion may provide a particular positioning of the inner electrically conductive portion and the intermediate insulating portion across a surface or plane of the peripheral adapter portion and/or across or in the plane of the lid. In this way and by selecting a suitable peripheral adapter portion one and the same arrangement or pre-assembly of an inner electrically conductive portion and an intermediate insulating portion can be universally adapted and to a large variety of designs, which are suitable for fixing and/or for closing a cavity formed by the bottom container and its sidewall.

Specifically, the mutual fixing and/or integration of the inner electrically conductive portion and the intermediate insulating portion in a lid may be somewhat delicate and/or elaborate. In order to provide a lid for a large variety of differently-shaped or differently sized cup-shaped bottom containers, it is now intended to provide a peripheral adapter portion for each or for many differently sized or differently shaped bottom containers and perspective sidewalls, wherein the peripheral adapter portions universally match with one and the same type or configuration of an inner electrically conductive portion and an intermediate insulating portion. This way, manufacturing costs and manufacturing expenditure can be reduced.

Moreover, in some examples material for preparing of providing the lid can be reduced. Respective costs and weight for producing the lid and/or a housing of the battery can be saved.

In some examples the peripheral adapter portion is made of an electrically conductive material. It may form part of one electrode of the battery. The peripheral adapter portion may form or constitute one electrode with the cup-shaped bottom container.

The inner electrically conductive portion may provide another electrode of the battery. It may be electrically insulated from the first electrode by the intermediate insulating portion, which entirely surrounds the inner electrically conductive portion.

In some examples of the battery, the peripheral adapter portion fills or occupies space between the intermediate insulating portion of the lid and the sidewall of the bottom container. The inner electrically conductive portion and/or the intermediate insulating portion may be of a standard or standardized size, shape and/or configuration. For adapting and for using the assembly of an inner electrically conductive portion and an intermediate insulating portion the peripheral adapter portion is always adapted to varying shapes and/or sizes of the cup-shaped bottom container. The peripheral adapter portion may not only provide an adaptation to varying shapes and sizes of the sidewall and/or of the cup-shaped bottom container. Moreover, it may provide a varying location or position of the inner electrically conductive portion and the intermediate insulating portion across the surface of the lid. In this way and by choosing or selecting one out of a variety of peripheral adapter portions for a particularly shaped or particularly designed battery, there may be easily varied and adapted the position of the electrode as provided by the inner electrically conductive portion with respect to the electrode assembly configured for arrangement inside the bottom container.

According to a further example the peripheral adapter portion comprises a through recess or through opening matching in size and shape with the outer edge of the intermediate portion. Typically, the entirety of the through recess may be filled or occupied by the assembly of the intermediate insulating portion and the inner electrically conductive portion. In this way, the through recess of the peripheral adapter portion can be effectively sealed and closed by the arrangement of the intermediate insulating portion and the inner electrically conductive portion. The lid may comprise at least three separate components, namely the inner electrically conductive portion, the intermediate insulating portion and the peripheral adapter portion, which may then provide or comprise a liquid-and/or gas-tight structure when the three components are mutually assembled and fixed.

According to another example the through recess of the peripheral adapter portion comprises an upstanding or protruding sidewall portion protruding from a plane of the peripheral adapter portion. Typically, the upstanding sidewall portion is or forms an inner edge of the through recess of the peripheral adapter portion. The sidewall portion may comprise a longitudinal extent, i.e. in axial or vertical direction that is larger than a thickness of the material of the adjoining, e.g. flat or even shaped, planar structure of the peripheral adapter portion. By way of the rather large sidewall portion a mutual contact surface for fixing and/or for fastening with the intermediate insulating portion can be increased. In this way, there can be provided a rather effective mutual connection between the intermediate insulating portion and the peripheral adapter portion.

According to a further example a material thickness of the peripheral adapter portion is smaller than a material thickness of at least one of the inner portion and the intermediate portion. In this way the total amount of material necessary for forming or for providing the peripheral adapter portion can be reduced. This may provide a reduction of weight as well as a reduction of costs for producing and/or for providing the peripheral adapter portion.

According to a further example the adapter portion comprises an inside surface. At least one of the inner electrically conductive portion and the intermediate insulating portion protrudes inwardly from the inside surface. When connected to the sidewall, the inside surface faces towards an interior of the cavity enclosed by the sidewall and the bottom or base. In this way there can be provided a rather good and easy contact with e.g. a current collector strip of the electrode assembly, which is located inside the cup-shaped bottom container. In some examples the inner electrically conductive portion may even protrude inwardly from the intermediate insulating portion. In this way, an electrical contact with e.g. a collector strip of the electrode assembly can be even improved.

In further examples the surface of the inner electrically conductive portion may be of convex shape and may protrudes inwardly or outwardly from the lid of the battery. A convex shape may even improve an electrical contact with the electrode assembly and/or with a collector strip inside the cavity of the bottom container.

According to a further example the outer peripheral edge portion of the adapter portion is of non-circular shape. It may comprise a rather flat or even shaped surface structure, such as a sheet of material. In some examples the outer peripheral edge portion of the adapter portion is of circular shape, specifically when the cup-shaped bottom container comprises a cylindrically-shaped sidewall. In other examples the outer peripheral edge portion of the peripheral adapter portion is of non-circular shape. In this case the outer peripheral edge portion of the peripheral adapter portion comprises a shape that matches in size and/or geometry with an inside perimeter of with an inside cross-section of the sidewall of the cup-shaped bottom container.

Irrespective of the shape of the peripheral adapter portion and/or irrespective of the shape or geometry of the sidewall of the cup-shaped bottom container the inner electrically conductive portion and the intermediate insulating portion may comprise always one and the same standardized shape or structure. Also here, the peripheral adapter portion may comprise a suitable and hence correspondingly sized through recess to receive the intermediate insulating portion and the inner electrically conductive portion.

According to a further example of the battery the lid to comprises an inner peripheral adapter portion fixed to an outer circumference of the intermediate insulating portion and further comprises an outer peripheral adapter portion, which is fixed to an outer edge portion of the inner peripheral adapter portion. The outer peripheral adapter portion forms or constitutes the outer peripheral edge portion of the lid.

In this way, there may be provided a lid of or for a battery comprising altogether four individual components, namely an inner electrically conductive portion, an intermediate insulating portion surrounding the inner electrically conductive portion, an inner peripheral adapter portion surrounding or fixed to the outer circumference of the intermediate insulating portion and an outer peripheral adapter portion fixed to an outer edge portion of the inner peripheral adapter portion.

Here, the outer peripheral adapter portion comprises an outer peripheral edge portion that is fixable to the sidewall of the cup-shaped bottom container.

By providing an inner peripheral adapter portion and an outer peripheral adapter portion of the entire adapter and be made of two separate components, wherein the outer peripheral adapter portion forms or establishes a mechanical contact to the sidewall of the bottom container and wherein the inner peripheral adapter portion forms or establishes a mechanical contact with the intermediate insulating portion of the lid.

By way of an inner peripheral adapter portion and an outer peripheral adapter portion the overall lid design can be easily modified in order to match with differently sized sidewalls of differently sized or differently configured cup-shaped bottom containers.

Specifically, the outer peripheral adapter portion may be provided as an optional adapter portion. The lid without the outer peripheral adapter portion may provide a fastening and fixing to the sidewall of the bottom container only and exclusively via the outer edge portion of the inner peripheral adapter portion, which may also form or constitute the outer peripheral edge portion of the lid.

For using one and the same lies for a differently sized, e.g. for a larger sized bottom container comprising a sidewall with an increased diameter or cross-section, the inner peripheral adapter portion may be fixed to the outer peripheral adapter portion, which may then surround or enclose the inner peripheral adapter portion. Fixing of the lid to the sidewall may be then provided by the outer peripheral adapter portion. In this way and simply by selecting or deselecting the outer peripheral adapter portion to form or to constitute the lid, the overall size of the lid and be easily modified and adapted in accordance to the given size or geometry of the cup-shaped bottom container.

According to a further example of the battery at least one of the inner peripheral adapter portion and the outer peripheral adapter portion comprises a stepped portion at or along its outer edge portion. A stepped portion may help to assemble and/or to mutually fix the inner peripheral adapter portion to the outer peripheral adapter portion. Moreover, and when the outer peripheral adapter portion comprises such a stepped portion it may facilitate fixing and/or fastening of the lid to the sidewall of the bottom container.

According to a further example the stepped portion of at least one of the inner peripheral adapter portion and the outer peripheral adapter portion comprises an annular-shaped profile with an abutment face to abut with an outside facing outer abutment face of at least one of the sidewall and the second peripheral adapter portion. By way of such a annular-shaped profile there can be provided a well-defined mutual abutment and fixing configuration, which allows to positionally fix the inner peripheral adapter portion to the outer peripheral adapter portion and/or to fix at least one of the inner peripheral adapter portion and the outer peripheral adapter portion to the sidewall of the bottom container.

According to a further example an outer peripheral edge portion of the inner peripheral adapter portion matches in size and shape with an inner edge portion of the outer peripheral adapter portion. The inner peripheral adapter portion is fixed to the outer peripheral adapter portion via the mutually engaging outer peripheral edge portion of the inner peripheral adapter portion and the inner edge portion of the outer peripheral adapter portion.

In this way, there can be provided a circumferential and/or continuous mutual fixing between the inner peripheral adapter portion and the outer peripheral adapter portion. A mutual fixing can be provided, e.g. by welding or gluing or bonding.

According to a further example the intermediate portion comprises an insulating material selected from one of a glass, a polymeric material or a ceramic material.

In a further aspect the present invention also relates to a set of batteries, e.g. implemented as button batteries. The set of batteries comprises a first battery as described above and further comprises a second battery as described above. The first battery comprises a first bottom container with a first sidewall and a first lid connected to the first sidewall and closing the first bottom container. The second battery comprises a second bottom container with a second sidewall that distinguishes in size or shape from the first sidewall. The second battery comprises a second lid to connect or fix to the second side wall and closing the second bottom container.

In further examples the second bottom container comprises a through opening for receiving the assembly of an inner electrically conductive portion and an intermediate insulating portion. Here, the position of the through recess of the second lid may distinguish from a position of the through recess of the first lid. Here, the sidewall of the first and the second batteries may be somewhat identical but the respective batteries may distinguish by the position and hence by the configuration of the electrode assembly arranged inside the respective cup-shaped bottom container.

With first and second lids comprising a through opening located at different positions relative to the outer peripheral edge portion of the respective lid, the first and second lid may provide a distinct and distinguishing position for the inner electrically conductive portion and the intermediate insulating portion relative to the sidewall of the bottom container.

According to a further example the first lid comprises a first inner electrically conductive portion and the second lid comprises a second inner electrically conductive portion. The first inner electrically conductive portion and the second inner electrically conductive portion may be of identical shape and/or shape. However, and since the first and second sidewalls of the first and second batteries distinguish from each other also the respective peripheral adapter portions of the first and second lids distinguish in order to close or to bridge a gap between an outer edge of the intermediate portion and the inside perimeter of the sidewall of the respective bottom containers.

According to a further example the first lid comprises a first intermediate insulating portion and the second lid comprises a second intermediate insulating portion. The first intermediate insulating portion and the second intermediate insulating portion may be identical in shape and/or size. In some examples, the inner electrically conductive portion and the intermediate insulating portion of the first lid and of the second lid may be substantially identical. Typically, and according to a further example one and the same arrangement of an inner electrically conductive portion and an intermediate insulating portion may be used for both, the first lid and the second lid.

The first lid and the second lid may only distinguish with regards to the structure, shape and/or size of the peripheral adapter portion so as to provide an effective adapter for fastening and/or fixing the inner electrically conductive portion and the intermediate insulating portion to differently sized, differently shaped and/or differently configured sidewalls of cup-shaped bottom containers or inner electrode assemblies.

According to a further example the first lid comprises a first peripheral adapter portion and the second lid comprises a second peripheral adapter portion. The first peripheral adapter portion distinguishes in size and/or in shape from the second peripheral adapter portion. Alternatively, the first peripheral adapter portion comprises a first through recess, whose position distinguishes from a respective position of a second through recess extending through the second peripheral adapter portion. The respective through recesses are sized and shaped to receive the assembly of the inner electrically conductive portion and the intermediate insulating portion of the respective lid.

Generally, the batteries as described herein may be implemented as so-called free-form batteries. Specifically, the cup-shaped button container, its sidewall and/or the lid may be of any shape or profile that is suitable to house the electrode assembly of the battery. In some examples, the batteries as described herein are implemented as so-called button batteries. Here, the sidewall and/or the cup-shaped bottom container may be of circular, annular or cylindrical shape. In other examples, the sidewall and/or the cup -shaped bottom container may be of polygonal shape, e.g. they may comprise a D-shape, an oval shape or any other suitable geometric form.

In still another aspect the present invention also relates to a method of manufacturing a battery as described above. The method comprises the steps of providing a cup-shaped bottom container comprising a base and an upstanding sidewall along an outer circumference of the base. In a subsequent step there is arranged an electrode assembly inside the bottom container.

In a further step there is provided an inner electrically conductive portion and an intermediate insulating portion surrounding the inner electrically conductive portion. In a further step there is selected a peripheral adapter portion out of a variety of available and differently sized, differently-shaped and/or differently configured peripheral adapter portions, wherein the selected peripheral adapter portion is sized, shaped and/or configured to bridge a gap between an outer edge of the intermediate portion and an inside perimeter of the sidewall. Thereafter and in a further step the inner electrically conductive portion and the intermediate insulating portion is or are fixed to the selected peripheral adapter portion to form or to constitute a lid for the battery. In a final step, the lid is fixed to the sidewall of the bottom container.

Optionally, the lid is welded or otherwise fixed to the sidewall of the bottom container. Optionally, the inner electrically conductive portion of the lid is welded to a current collector strip of the electrode assembly arranged inside the housing of the battery made of the bottom container covered and closed by the lid.

### Brief description of the drawings

In the following numerous examples of the invention will be described in greater detail by making reference to the drawings, in which:
Figure 1 illustrates the main components of a battery according to an example of the present invention comprising a rolled-up electrode assembly.
- Figure 2 illustrates the battery of Figure 1 in the assembled state.
- Figure 3 shows a section view of the cup and lid of the battery of Figures 1 and 2, prior to the sealing process.
- Figure 4 show a profile of one example of the lid,
- Figure 5 shows a profile of another example of the lid,
- Figure 6 shows a profile of an example of the lid comprising an inner and an outer peripheral adapter portion,
- Figures 7 and 8 show two different examples of a lid, and
- Figures 9 and 10 illustrate matching profiles of the rim of the sidewall and of the edge of the lid, in a battery according to one embodiment of the invention.

### Detailed description of the invention

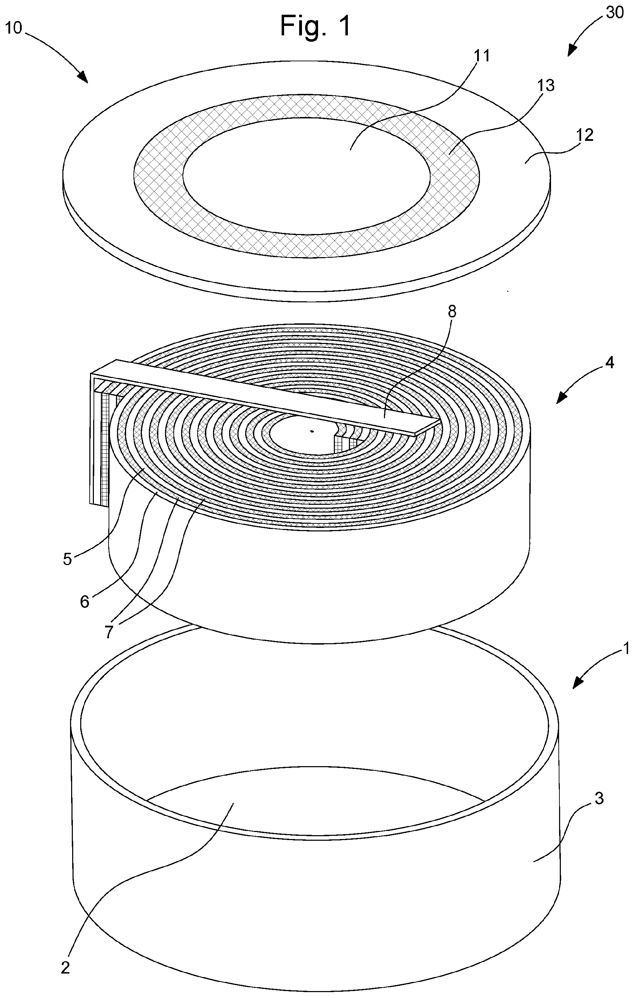

Figure 1 illustrates the components of a rechargeable lithium-ion battery. The battery comprises an electrically conductive cup-shaped bottom container 1, preferably formed of metal, having a round base 2 and an upstanding sidewall 3 along the circumference of the base 2. Also included is a wound-up electrode assembly 4 consisting of a positive electrode 5, a negative electrode 6 and separator sheets 7 between the wound electrodes, and furthermore comprising current collector strips 8. The image of the electrode assembly 4 is a simplified representation and the assembly 4 may be realized in accordance with any known design thereof. Only the negative collector strip 8, coupled to the negative electrode 6 is visible in the drawing. A positive collector strip coupled to the positive electrode 5 is present on the underside of the electrode assembly 4. The collector strip 8 is shown in simplified fashion as a straight rectangular strip but it may have a different shape than that. As known by the skilled person, the collector strips 8 are preferably flexible so that the end of the strips can be welded to the respective battery contacts.

The battery comprises a lid 10 that comprises three portions: an electrically conductive central portion 11, an electrically conductive peripheral adapter portion 12 and an electrically insulating intermediate portion 13 that separates and electrically isolates the central portion 11 and the peripheral adapter portion 12 from each other. The three portions 11, 12 and 13 may form one single object, i.e. the intermediate portion 13 is joined to the conductive portions 11 and 12 along its respective inner and outer edges. In the embodiment shown in Figure 1, all three portions 11, 12 and 13 of the lid 10 have the same thickness. According to alternative embodiments, the thickness of the parts may differ.

The materials used for the portions 11, 12 and 13 are mechanically strong and chemically stable against the internal materials of the battery. The conductive portions 11 and 12 may be formed of the same material, preferably a metal, as the bottom container 1. Suitable metals include nickel, cobalt and certain types of stainless steel, such as SS 304 and SS 316. The material of the insulating portion 13 is furthermore capable of bonding hermetically onto the material used for portions 11 and 12. The insulating portion 13 may be formed for example of glass, certain types of rubber or PTFE (polytetrafluoroethylene) and any of its derivatives. The lid 10 may be manufactured by well-known processes for joining different materials to each other.

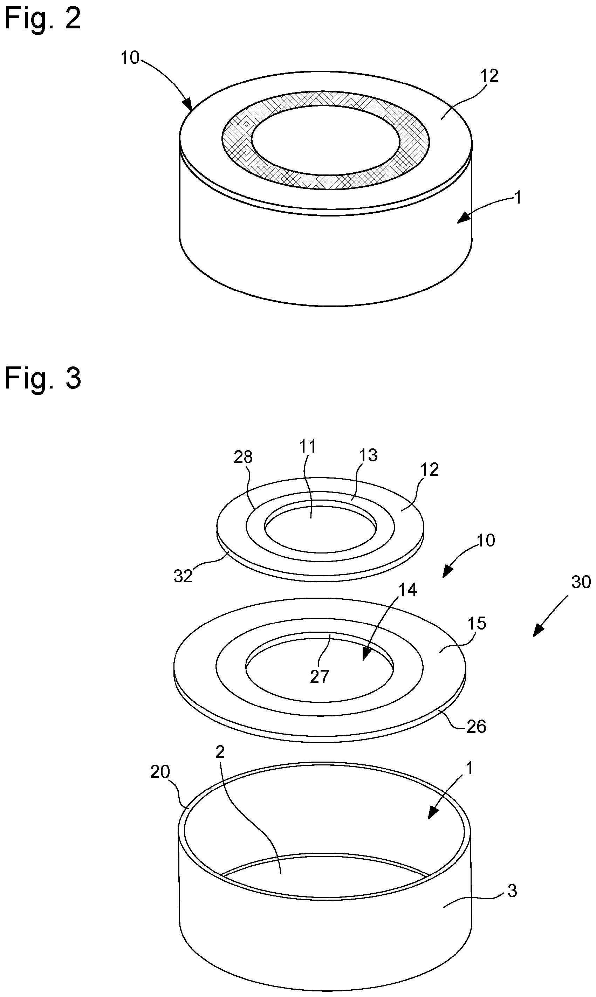

The assembly of the battery according to the embodiment shown includes welding the positive current collector strip to the inside surface of the base 2 of the cup-shaped bottom container 1 and inserting the electrode assembly 4 into said container. A liquid electrolyte is injected in the container 1 and the negative current collector strip 8 is welded to the central portion 11 of the lid 10. The lid 10 is then placed onto the sidewall 3 of the cup-shaped container 1 and joined thereto along its outer edge by a bonding technique that realizes a sealing connection between the lid 10 and the container 1, resulting in the finished battery illustrated in Figure 2. The sealing connection may be realized by welding, for example laser welding.

The battery has a positive contact formed by the base 2 of the cup-shaped container 1, and a negative contact formed by the central portion 11 of the lid 10. The contacts are electrically isolated from each other by the intermediate portion 13 of the lid 10. The sealing connection of the lid's edge to the rim of the upstanding wall 3 is electrically conductive and seals off the interior of the battery 20 from the environment.

Figure 3 shows a section view of the cup 1, with the lid 10 aligned to the rim 20 of the sidewall 3 prior to the realization of the sealing connection. The electrode assembly is not shown in this image. The sidewall 3 may have a rectangular or cylindrical profile, i.e. the rim 20 is essentially perpendicular to the sides of the sidewall 3. Alternatively, the rim 20 may be slightly convex. The latter profile typically occurs when the cup is produced by a deep drawing process. In the example shown, the lid 10 and the sidewall 3 have the same thickness, but there may be a slight difference in thickness between the two. In most batteries, these thicknesses are in the order of a few tens of a millimeter. For example, the thickness of the sidewall 3 may be between 0.1 mm and 0.3 mm, with the thickness of the lid 10 being between 0.1 mm and 0.5 mm. According to a preferred embodiment, the thickness of the sidewall 3 is 0.15 mm and the thickness of the lid 10 is 0.2 mm.

In Fig. 3, there is shown an example of a lid 10 comprising 4 individual components, namely the inner electrically conductive portion 11 surrounded by the intermediate insulating portion 13. The intermediate insulating portion 13 is surrounded by a peripheral adapter portion 12 forming or constituting an outer peripheral edge portion 32. With the example according to Fig. 3 the peripheral adapter portion 12 is an inner peripheral adapter portion 12 and the lid 10 further comprises an outer peripheral adapter portion 15.

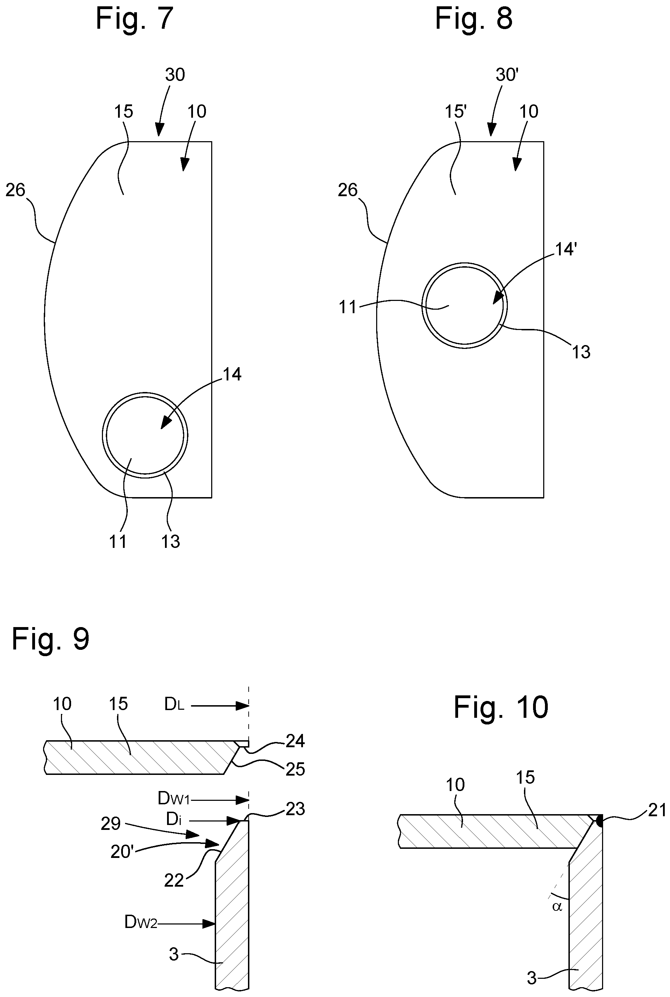

Both, the inner peripheral adapter portion 12 and the outer peripheral adapter portion 15 comprise an annularly or ring-shaped planar structure. The outer peripheral adapter portion 15 comprises a through recess 14 that is sized to receive the inner peripheral adapter portion 12. Hence, an inner edge portion 27 of the outer peripheral adapter portion 15 is matching in size and shape with the outer edge portion 32 of the inner peripheral adapter portion 12. The outer edge portion 26 of the outer peripheral adapter portion 15 is configured to engage and/or 2 fix to the sidewall 3 of the container 1, as e.g. shown in Figs. 9 and 10.

The outer peripheral adapter portion 15 may be provided only optionally. Generally, the size and shape of the inner peripheral adapter portion 12 may provide a bridging to close a gap between an outer edge 28 of the intermediate insulating portion 13 and the inner perimeter or inside surface of the sidewall 3.

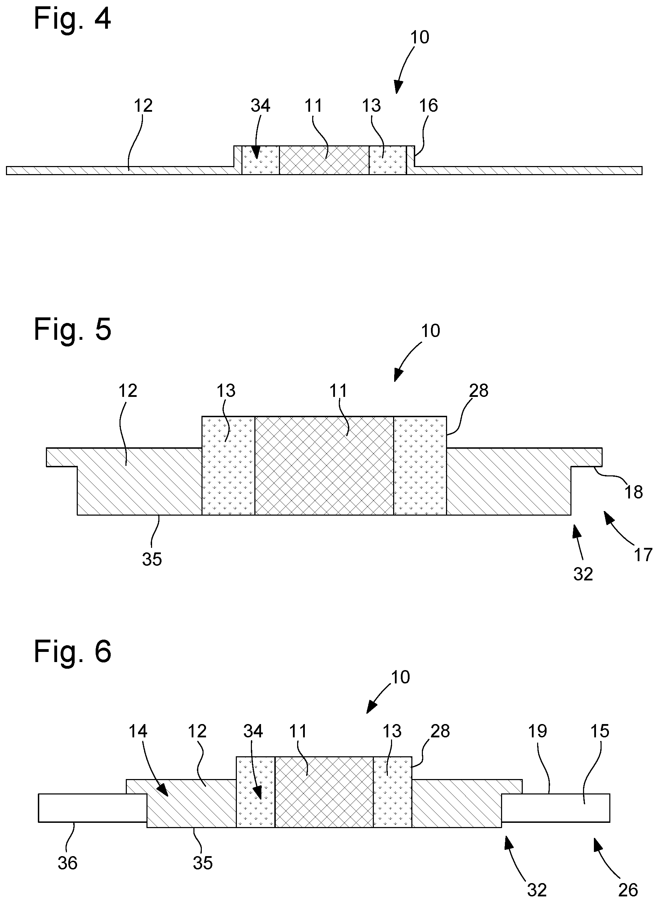

In the cross-section according to Fig. 4 there's particularly illustrated the mutual connection between the peripheral adapter portion 12, the inner electrically conductive portion 11 and the intermediate insulating portion 13.

The inner electrically conductive portion 11 comprises a conductive metallic material, e.g. stainless steel. The intermediate insulating portion comprises an insulating material, such as glass, a polymeric material or a ceramic material. It may be welded or bonded to the outer perimeter or outer circumference of the inner electrically conductive portion 11. The peripheral adapter portion 12 comprises a through recess 34 to receive and/or to engage with the intermediate insulating portion 13. For this, the inner edge of the through recess 34 comprises an upstanding sidewall 16, e.g. a cylindrically upstanding sidewall 16.

An inside surface of the sidewall 16 may closely match in size with an outside surface, e.g. an outer edge 28 or an outside facing rim of the intermediate insulating portion 13. An outside or outer edge 26 of the peripheral adapter portion 12 as shown in Fig. 14 may either directly connect to the sidewall 3 or may be connected to an outer peripheral adapter portion 15 as shown in Fig. 6.

For improving a mechanical fastening of the peripheral adapter portion 12, it may comprise a step portion 17 at or along an outer edge portion 32. The step portion 17 may comprise an L-shaped profile with a radially outwardly extending flange portion comprising a downwardly pointing or inwardly pointing abutment face 18. The abutment face 18 may be configured to abut with an outside facing surface 19 and hence with an abutment face 19 of the outer peripheral adapter portion 15. Alternatively, it may engage or abut with a respective abutment face or step portion 23 as directly provided at an upper end of the sidewall 3 as e.g. shown in Fig. 9.

In the example according to Fig. 6 the inner peripheral adapter portion 12 is inserted into the through recess 14 of the outer peripheral adapter portion 15, which in turn provides or constitutes the outer peripheral edge portion 26 of the lid 10, which is configured for fastening to the sidewall 3 of the bottom container 1.

As it is further apparent from the example of Fig. 6, at least one of the inner electrically conductive portion 11 and the intermediate insulating portion 13 may protrude from an inside surface 35, 36 of at least one of the inner peripheral adapter portion 12 and the outer peripheral adapter portion 15. Moreover, and in further examples (not illustrated) it may be only the inner electrically conductive portion 11 that protrudes inwardly from at least one of the inside surfaces 35, 36 of the inner or outer peripheral adapter portions 12, 15. It may also protrude inwardly from the intermediate insulating portion 13. Such an inwardly extending protrusion or projection of the electrically conductive portion 11 may facilitate and improve electrical connectivity to the collector strip 8.

In some examples it may be provided that the inner electrically conductive portion 11, the intermediate insulating portion 13 and the inner peripheral adapter portion 12 form or constitute a standardized electrode structure of a lid 10. For a size adaptation of the respective electrode assembly there may be then exclusively used the outer peripheral adapter portion 15. The inner peripheral adapter portion 12 and the outer peripheral adapter portion 15 may be made of one and the same metallic material. They may also comprise different types of a conducting metallic material.

In either way, a mutual fastening, e.g. laser welding of the inner peripheral adapter portion 12 to the outer peripheral adapter portion 15 may be much easier than a fastening or welding between the intermediate insulating portion 13 and the inner peripheral adapter portion 12. In order to save production and manufacturing costs it may be of particular benefit to provide or to pre-assemble the inner electrically conductive portion 11, the intermediate insulating portion 13 and the inner peripheral adapter portion 12, e.g. in a separate assembly environment.

Here, the mutual assembly may be facilitated because the inner peripheral adapter portion 12 may be provided always with the same size and shape. The final size adaptation or shape adaptation to varying sizes of differently-shaped or differently sized cup-shaped bottom containers may then be provided by the outer peripheral adapter portion.

Fig. 7 and 8 illustrate a kit of two batteries 30, 30'. The batteries 30, 30' comprise a lid 10 of non-circular shape. With the battery 30 as shown in Fig. 7 the inner electrically conductive portions 11 and the intermediate insulating portion 13 are located at a totally different position compared to the example of the battery 30' of Fig. 8. The position of the inner electrically conductive portion 11 and the intermediate insulating portion 13 may be easily changed by simply selecting a suitable peripheral adapter portion 15.

With the peripheral adapter portion 15 according to Fig. 7 the through recess 14 is provided at or near an outer edge of the lid 10 and hence close to the sidewall 3. With the further example of the peripheral adapter portion 15' as shown in Fig. 8, the through recess 14' is located near a central portion or near a middle section of the surface of the lid 10. In this way and by simply selecting one suitable peripheral adapter portion 15 out of a set of available adapter portions 15, 15' the position of the inner electrically conductive portion 11 and the intermediate insulating portion 13 can be universally adapted to varying demands for differently sized or differently-shaped or differently configured batteries.

The lid diameter DL is configured to match (i.e. it is as close as possible to) the outer diameter D_{W1} of the sidewall 3 as illustrated in Figs. 9 and 10. The lid 10 is aligned to said outer diameter D_{W1} and placed onto the rim 20, after which the assembly is subjected to a welding process such as laser welding, thereby creating a weld connection 21 along the aligned perimeters of the rim 20 and the lid 10. The weld connection 21 is represented symbolically as a black half-circle in the image shown, but it may have a different shape and size in reality, depending for example on the curvature of the rim 20 in the case of a convex rim.

The matching of the diameters of the lid 10 and the sidewall 3 as well as the alignment should be rather accurate in order for the welding process to be effective in sealing off the battery's interior. Also, displacement of the lid 10 during the welding process is likely to cause additional difficulties in terms of obtaining an effective seal.

The rim of the sidewall 3 and the edge of the lid 10 are shaped so as to reduce the alignment difficulty as well as the displacement-induced errors, and thereby improve the quality of the sealing connection. In the embodiment of Figures 5a and 5b the rim 20' of the sidewall 3 is provided with a conical portion 22, and a step portion 23. The step portion 23 extends between the outer diameter D_{W1} of the rim 20' and an intermediate diameter Dᵢ. The conical portion 22 extends between the intermediate diameter Dᵢ and the inner diameter D_{W2} of the rim 20'. The edge of the lid 10 is shaped in a corresponding manner, comprising a step portion 24 along its outer diameter, and a conical portion 25 radially inwards of the step portion 24. The conical portions 22 and 25 are complementary, i.e. they have the same inclination angle so that the exterior cone of the lid 10 fits into the interior cone of the rim 20'.

Assembling the lid 10 to the cup 1 now includes inserting the conical portion 25 of the lid 10 into the conical portion 22 of the cup until the step portion 24 of the lid stops on the step portion 23 of the cup. At this point therefore, both the conical portions 22 and 25 and the step portions 23 and 24 are in mutual contact. Following this, the weld connection 21 is produced along the aligned perimeters of the step portions 23 and 24, as illustrated in Figure 10.

This configuration thereby enables an improved alignment of the lid 10 to the rim 20' of the sidewall 3 due to the self-aligning property of the complementary conical portions 22 and 25. The insertion of one conical portion into the other also realizes a mechanically stable preliminary connection between the lid 10 and the sidewall 3, so that the alignment is more easily maintained during the welding process. The diameter D_{L} of the lid 10 preferably still matches the outer diameter D_{W1}, but a slightly larger mismatch between these diameters may be allowable in this case without reducing the quality of the weld connection, given that the correct alignment is now ensured.

### Nomenclature

- 1: container
- 2: base
- 3: sidewall
- 4: electrode assembly
- 5: electrode
- 6: electrode
- 7: sheet
- 8: collector strip
- 10: lid
- 11: inner portion
- 12: adapter portion
- 13: intermediate portion
- 14: through recess
- 15: adapter portion
- 16: sidewall
- 17: step portion
- 18: abutment face
- 19: abutment face
- 20: rim
- 21: weld connection
- 22: conical portion
- 23: step portion
- 24: step portion
- 25: conical portion
- 26: outer edge portion
- 27: inner edge portion
- 28: outer edge
- 29: abutment face
- 30: battery
- 32: outer edge portion
- 34: trough recess
- 35: inside surface
- 36: inside surface

## Claims

1. A battery (30) comprising:
- a cup-shaped bottom container (1) to accommodate an electrode assembly (4), the bottom container (1) comprising a base (2) and an upstanding sidewall (3) along an outer circumference of the base (2),
- a lid (10) comprising:
∘ an inner electrically conductive portion (11),
∘ an intermediate insulating portion (13) surrounding the inner electrically conductive portion (11),
∘ an inner peripheral adapter portion (12) fixed to an outer circumference of the intermediate insulating portion (13),
∘ an outer peripheral adapter portion (15) fixed to an outer edge portion (32) of the inner peripheral adapter portion (12), wherein the outer peripheral adapter portion (15) forms or constitutes an outer peripheral edge portion (26) of the lid (10),
∘ the inner (12) and the outer peripheral portion (15) forming a peripheral adapter portion (12, 15),
wherein the peripheral adapter portion (12, 15) is fixable to the sidewall (3) of the bottom container (1) via the outer peripheral edge portion (26), wherein the peripheral adapter portion (12, 15) is sized, shaped and/or configured to bridge a gap between an outer edge (28) of the intermediate portion (13) and an inside perimeter of the sidewall (3).

2. The battery (30) according to any one of the preceding claims, wherein the peripheral adapter portion (12, 15) comprises a through recess (14, 34) matching in size and shape with the outer edge (28) of the intermediate portion (13)..

3. The battery (30) according to any one of the preceding claims, wherein a material thickness of the peripheral adapter portion (12, 15) is smaller than a material thickness of at least one of the inner portion (11) and the intermediate portion (13).

4. The battery (30) according to any one of the preceding claims, wherein the outer peripheral edge portion (26, 32) of the adapter portion (12, 15) is of non-circular shape.

5. The battery (30) according to any one of the preceding claims, wherein at least one of the inner peripheral adapter portion (12) and the outer peripheral adapter portion (15) comprises a step portion (17, 24) at or along its outer edge portion (26, 32).

6. The battery (30) according to any one of the preceding claims, wherein the step portion (17, 24) comprises an L-shaped profile with an abutment face (18) to abut with an outside facing outer abutment face (19, 29) of at least one of the sidewall (3) and the second peripheral adapter portion (15).

7. The battery (30) according to any one of the preceding claims, wherein the outer peripheral edge portion (32) of the inner peripheral adapter portion (12) matches in size and shape with an inner edge portion (27) of the outer peripheral adapter portion (15) and wherein the inner peripheral adapter portion (12) is fixed to the outer peripheral adapter portion (15) via the mutually engaging outer peripheral edge portion (32) of the inner peripheral adapter portion (12) and the inner edge portion (27) of the outer peripheral adapter portion (15).

8. A set of batteries (30, 30') comprising a first battery (30) according to any one of the preceding claims and comprising a second battery (30') according to any one of the preceding claims,
- wherein the first battery (30) comprises:
∘ a first bottom container (1) with a first sidewall (3), and
∘ a first lid (10) connected to the first sidewall (3) and closing the first bottom container (1),
- wherein the second battery (30') comprises:
∘ a second bottom container (1) with a second sidewall (3') that distinguishes in size or shape from the first sidewall (3), and a
∘ a second lid (10') connected to the second sidewall (3') and closing the second bottom container (1').

9. The set according to claim 8, wherein the first lid (10) comprises a first inner electrically conductive portion (11) and wherein the second lid (10') comprises a second inner electrically conductive portion (11) wherein the first inner electrically conductive portion (11) and the second inner electrically conductive portion (11) are of identical shape and/or size.

10. The set according to claim 8 or 9, wherein the first lid (10) comprises a first intermediate insulating portion (13) and wherein the second lid (10') comprises a second intermediate insulating portion (13) wherein the first intermediate insulating portion (11) and the second intermediate insulating portion (11) are of identical shape and/or size.

11. The set according to any one of the preceding claims 8 to 10, wherein the first lid (10) comprises a first peripheral adapter portion (12, 15) and wherein the second lid (10') comprises a second peripheral adapter portion (15'), wherein the first peripheral adapter portion (12, 15) distinguishes in size and/or in shape from the second peripheral adapter portion (12', 15').

12. A method of manufacturing a battery (30) according to any one of the preceding claims 1 to 7 comprising the steps of:
- providing a cup-shaped bottom container (1) comprising a base (2) and an upstanding sidewall (3) along an outer circumference of the base (2),
- arranging an electrode assembly (4) inside the bottom container (1),
- providing an inner electrically conductive portion (11) and an intermediate insulating portion (13) surrounding the inner electrically conductive portion (11),
- selecting a peripheral adapter portion (12, 15) out of a variety of available and differently sized, differently shaped and/or differently configured peripheral adapter portions (12, 15), wherein the selected peripheral adapter portion (12, 15) is sized, shaped and/or configured to bridge a gap between an outer edge (28) of the intermediate portion (13) and an inside perimeter of the sidewall (3),
- fixing the inner electrically conductive portion (11) and the intermediate insulating portion (13) to the selected peripheral adapter portion (12, 15) to form or to constitute a lid (10) and
- fixing the lid (10) to the sidewall (3) of the bottom container (1).
